# EUROPEAN PATENT APPLICATION

(11) **EP 4 250 327 A1**
(43) Date of publication of application: **27.09.2023**
(21) Application number: 22163455.3
(22) Date of filing: 22.03.2022
(51) Int. Cl.: H01H 33/56

(54) **DYNAMIC SEALING SYSTEM FOR A VOLTAGE APPARATUS, VOLTAGE APPARATUS COMPRISING A DYNAMIC SEALING SYSTEM, AND USE OF A MATERIAL FOR A CONTACT SLIDING SEAL OF A DYNAMIC SEALING SYSTEM**

(71) Applicant: Hitachi Energy Switzerland AG, 5400 Baden (CH)
(72) Inventor: SONG, Liang, Beijing, 100029 (CN); TAO, ZhiQiang, Beijing, 100085 (CN); LIU, Lu, Beijing, 100029 (CN); BOEHM, Moritz, 5507 Aargau (CH); SCHEEL, Saskia, 5600 Lenzburg (CH); NAEF, Manuel, 8645 Rapperswil-Jona (CH); WANG, Yang, Beijing, 100024 (CN)
(74) Representative: Michalski Hüttermann & Partner Patentanwälte mbB

(57) **Abstract**

The invention relates to a dynamic sealing system (12) for sealing a moving element (14) of a fluid-insulated high or medium voltage apparatus (10) towards a stationary element (16) of the apparatus (10) against a loss of an insulation fluid of the apparatus (10), comprising a contact sliding seal (20), wherein the contact sliding seal (20) is configured to come in direct contact to the moving element (14) of the apparatus (10) performing a motion during operation of the apparatus (10), and/or wherein the contact sliding seal (20) is configured to come in direct contact to a contact surface of the stationary element (16) during operation of the apparatus (10), and wherein the contact sliding seal (20) is essentially fluorine free.

The invention also relates to a high or medium voltage apparatus (10) comprising the above sealing system (12).

Furthermore, the invention relates to a use of a material for a contact sliding seal (20) of a dynamic sealing system (12).

## Description

### Technical Field

The invention relates to a dynamic sealing system for sealing a moving element of a high or medium voltage apparatus towards a stationary element of the apparatus against a loss of an insulation fluid of the apparatus, comprising a contact sliding seal.

The present invention also relates to a high or medium voltage apparatus comprising a fluid-insulated arcing chamber, an operating mechanism, and the above sealing system.

The present invention also relates to a use of a material for a contact sliding seal of a dynamic sealing system for sealing a moving element of a fluid-insulated high or medium voltage apparatus towards a stationary element of the apparatus against a loss of an insulation fluid of the apparatus.

### Background Art

High or medium voltage apparatuses, such as circuit breakers or switchgears, are essential for the protection of technical equipment, especially in the high voltage range. They are predominantly used for interrupting a current, when an electrical fault occurs. As an example, circuit breakers have the task of opening arcing contacts, quench an arc, and keeping the arcing contacts apart from one another in order to avoid a current flow even in case of high electrical potential originating from the electrical fault itself. For example, the circuit breaker, may break medium to high short circuit currents of typically 1 kA to 80 kA at medium to high voltages of 12 kV to 72 kV and up to 1200 kV.

Some high or medium voltage apparatuses, namely fluid-insulated high or medium voltage apparatuses, comprise an insulation fluid or insulation media, such as a gas or a liquid, within a fluid-insulated arcing chamber, in order to improve quenching of the arc, when operating the arcing contacts.

Dynamic sealing systems have been developed in order to prevent the escape of the insulation fluid from a sealed chamber such as the fluid-insulated arcing chamber and to prevent the intrusion of impurities into the sealed chamber, for example into the arcing chamber which can affect the dielectric performance of the insulation fluid. Therefore, it is important to have a dynamic sealing system including its component to exhibit high performance, and compatibility with each other to perform reliably over the life time of the high or medium voltage apparatus. Further, the design of the dynamic sealing system and the high or medium voltage apparatus including the selection of the materials for use the dynamic sealing system and/or high or medium voltage apparatus may be such that it reduces environmental risk.

### Summary of invention

It is an object of the invention to provide means to improve the environmentally friendliness, the reliability and the lifetime of high or medium voltage apparatuses, such as gas-insulated circuit breakers. It is further an object of the present invention to provide a dynamic sealing system and materials for a dynamic sealing system that are environmentally friendly, reliable and have an improved lifetime.

The object of the invention is solved by the features of the independent claims. Modified embodiments are detailed in the dependent claims. Several embodiments of a dynamic sealing system are illustrated with a circuit breaker as an exemplary high or medium voltage apparatus.

Thus, the object is solved by a dynamic sealing system for sealing a moving element of a fluid-insulated high or medium voltage apparatus towards a stationary element of the apparatus against a loss of an insulation fluid of the apparatus, comprising a contact sliding seal, wherein the contact sliding seal is configured to come in direct contact to the moving element of the apparatus performing a motion during operation of the apparatus, and/or wherein the contact sliding seal is configured to come in direct contact to a contact surface of the stationary element during operation of the apparatus, and wherein the contact sliding seal is essentially fluorine free.

Furthermore, the object is solved by a use of a material for a contact sliding seal of a dynamic sealing system for sealing a moving element of a fluid-insulated high or medium voltage apparatus towards a stationary element of the apparatus against a loss of an insulation fluid of the apparatus, wherein the material is essentially fluorine free.

The object is also solved by a high or medium voltage apparatus comprising a fluid-insulated sealed chamber, an operating mechanism, and the above sealing system, wherein the operating mechanism is configured to perform an operation by a motion of a rod as moving element in the sealed chamber, and wherein the contact sliding seal is arranged such that the contact sliding seal is in direct contact to the rod and/or in direct contact to a contact surface of a stationary element.

The object is also solved by a high or medium voltage apparatus comprising a fluid-insulated arcing chamber, an operating mechanism, and the above sealing system, wherein the operating mechanism comprises a first arcing contact and a second arcing contact and is configured to electrically connect and/or disconnect the first arcing contact and the second arcing contact within the arcing chamber by a motion of a rod as moving element, and wherein the contact sliding seal is arranged such that the contact sliding seal is in direct contact to the rod.

In an alternative the object is solved by a high or medium voltage apparatus comprising a fluid-insulated arcing chamber, an operating mechanism, and the above sealing system, wherein the operating mechanism comprises a first arcing contact and a second arcing contact and is configured to electrically connect and/or disconnect the first arcing contact and the second arcing contact within the arcing chamber by a motion of a rod as moving element, and wherein the contact sliding seal is arranged such that the contact sliding seal is in direct contact to a contact surface of a stationary element.

In a further alternative the object is solved by a high or medium voltage apparatus comprising a fluid-insulated arcing chamber, an operating mechanism, and the above sealing system, wherein the operating mechanism comprises a first arcing contact and a second arcing contact and is configured to electrically connect and/or disconnect the first arcing contact and the second arcing contact within the arcing chamber by a motion of a rod as moving element, and wherein the contact sliding seal is arranged such that the contact sliding seal is in direct contact to the rod and in direct contact to the contact surface of a stationary element.

With regard to the high or medium voltage apparatus, the high or medium voltage apparatus of the present invention may be configured as a circuit breaker, a switch-gear, a live tank circuit breaker, a dead tank circuit breaker, or a plug and switch system. In the context of this invention medium to high voltages means voltages of 12 kV to 72 kV (medium voltage) and up to 1200 kV (high voltage).

In connection to the operation of the high or medium voltage apparatus, the apparatus is preferably responsive to a detection of a fault condition or fault current. On detection of such a fault condition or fault current, the operating mechanism of the apparatus may operate the high or medium voltage apparatus so as to interrupt the current flowing there through, thereby interrupting the current flowing in the electrical circuit. Once the fault condition is remedied, the apparatus may operate the operating mechanism so as to restore the current flowing there through by performing the circuit connecting operation. Preferably the operation of the high or medium voltage apparatus is a circuit breaking and/or connecting operation. During the operation of the high or medium voltage apparatus the rod of the high or medium voltage apparatus performs a motion. The motion of the rod can be a rotation and/or a translation. Preferably, the motion of the rod is a translation, even more preferably the motion of the rod is a linear motion along a longitudinal axis of the rod.

Preferably the high or medium voltage apparatus comprises the first arcing contact and the second arcing contact, wherein at least one of the two arcing contacts is movable in order to electrically connect and/or disconnect the first arcing contact and the second arcing contact within the arcing chamber. Preferably the at least one of the two arcing contacts is movable along an axis for connecting and/or disconnecting. The movement of at least one of the arcing contacts is preferably mechanically connected to the motion of the rod of the high or medium voltage apparatus. Thus, during operation of the high or medium voltage apparatus and preferably during circuit breaking and/or connecting operation the rod of the high or medium voltage apparatus performs a motion.

Further preferably the high or medium voltage apparatus is a circuit breaker or a high or medium voltage apparatus for performing a circuit breaking and/or circuit connecting operation. Furthermore, the main function of the high or medium voltage apparatus is preferably to disconnect the arcing contacts with a speed proving an appropriate circuit breaking reaction time and to keep the arcing contacts far away from each other to avoid the current flow, even in case of high electrical potential coming from the fault itself. Thus, the disconnecting operations must be done with a determined speed according to the specifications of the high or medium voltage apparatus. Hence also the motion of the rod during circuit breaking and/or connecting operation may be of high speed.

Further preferably, during circuit breaking operation the arcing contacts within the arcing chamber of the high or medium voltage apparatus separate in order to interrupt the electrical circuit. Furthermore, during circuit connecting operation the arcing contacts within the arcing chamber of the high or medium voltage apparatus electrically connect in order to allow current passing through the electrical circuit. For example, spring arrangements, pneumatic arrangements or some other means are used to separate and/or close the arcing contacts. Some of the energy required for separating the arcing contacts may be obtained from the fault current itself.

When interrupting the current flowing in the electrical circuit, an arc is generally generated. This arc must be cooled so that it becomes quenched or extinguished, such that the gap between the arcing contacts repeatedly can withstand the voltage in the electrical circuit. In this context, the fluid-insulated arcing chamber of the high or medium voltage apparatus preferably comprises an insulation gas. In other words, the high or medium voltage apparatus is preferably configured as gas-insulated high or medium voltage apparatus. Particular preferably the high or medium voltage apparatus is configured as gas-insulated circuit breaker.

The insulating gas preferably provides dielectric insulation and acts as arc extinction medium when the arc forms within the arcing chamber during circuit breaking operation. More preferably, the insulation gas comprises ecofriendly gas or gas mixtures such as Carbon dioxide (CO₂) or mixtures with CO₂, mixtures of fluoroketons and/or fluoronitriles with a carrier gas. The insulation gas can also be Sulphur hexafluoride (SF₆), or preferably mixtures of SF₆ with a carrier gas (reduced use of SF₆). The carrier gas for use with fluoroketons and/or fluoronitriles and/or SF₆ may comprise air, N₂, CO₂, and mixtures thereof. Further preferably the insulation gas may have a reduced fluorine content or may even be essentially fluorine free.

At least during circuit breaking operation a pressure of the insulation gas within the arcing chamber is preferably much above atmospheric pressure, more preferably for example the pressure can be above 500 kPa, and even above 1000 kPa and the dynamic sealing system needs to be robust in sealing at such high pressures.

In order to seal the arching chamber, the high or medium voltage apparatus comprises the sealing system. The sealing systems preferably prevents the escape of the insulation fluid from the arcing chamber and further preferably prevents the intrusion of impurities into the arcing chamber between moving parts. The sealing system comprises the contact sliding seal. The contact sliding seal is configured to come in direct contact with the rod of the high or medium voltage apparatus and/or with the contact surface of the stationary element. Preferably the contact sliding seal is configured to come in direct contact with the rod and with the contact surface of the stationary element. As already mentioned, during circuit breaking and/or connecting operation the rod of the high or medium voltage apparatus performs a motion with regard to the stationary element of the high or medium voltage apparatus. In other words, the sealing system is preferably a dynamic sealing system and not a stationary sealing system. The motion of the rod during circuit breaking and/or connecting operation with regard to the stationary element can be a rotation and/or a translation. Preferably the motion of the rod is a translation and even more preferably the motion of the rod is a linear motion along a longitudinal axis of the rod.

Furthermore, in the state where the sealing system is arranged in the high or medium voltage apparatus, the contact sliding seal of the sealing system preferably sealingly rests on an outer surface of the rod or the contact sliding seal of the sealing system sealingly rests on the on the contact surface of the stationary element. The sealing system and preferably the contact sliding seal is configured to fulfill the high pressure and high motion speed requirements during operation of the high or medium voltage apparatus. Furthermore, the sealing system is preferably compatible with the insulation fluid and particular preferably with the insulation gas used in the arcing chamber of the high or medium voltage apparatus.

As already mentioned, the contact sliding seal of the sealing system is essentially fluorine free. Being essentially fluorine free means that the material (polymer/monomer/fillers) of the contact sliding seal does not comprise fluorine, and/or that the material of the contact sliding seal does not chemically comprise a substance containing fluorine. Further preferably being essentially fluorine free means that the material of the contact sliding seal does not comprise more than 0,1 wt % fluorine based on the weight of the contact sliding seal. Further preferably being essentially fluorine free means that the material of the contact sliding seal does not contain more fluorine than 0,1 wt % based on the weight of the contact sliding seal, resulting from impurities, interaction with the other components of the dynamic sealing system, interaction with the high or medium voltage apparatus or components of the high or medium voltage apparatus, including the insulation gas, and/or byproducts formed in the insulation gas from arcing, and/or due to operating conditions (e.g. temperature, pressure, wear from friction) of the dynamic sealing system in the high or medium voltage apparatus.

In particular the contact sliding seal does not comprise a fluorinated polymer, such as polytetrafluoroethylene (PTFE). The absence of fluorine in the contact sliding seal makes the sealing system environmentally friendly. Especially when the sealing system is used with ecofriendly insulation gases, such as CO₂ based insulating gases, an environmentally friendly high voltage apparatus can be provided.

According to a preferred embodiment of the invention, the contact sliding seal comprises a fluorine free organic polymer or mixtures thereof. In other words, a fluorine free organic polymer or mixtures thereof is used for the material of the contact sliding seal. An organic polymer is a carbon-based polymer. The organic polymer may comprise in addition to carbon and hydrogen atoms heteroatoms, such as oxygen or nitrogen. However, the organic polymer does not comprise fluorine. The organic polymer can be a homopolymer, meaning that the polymer contains a singly type of repeat unit. Alternatively, the polymer may be a copolymer or a terpolymer. The structure of the organic polymer may be linear, unbranched. Alternatively, the organic polymer may be branched and/or crosslinked. Preferably the organic polymer is a thermoplastic.

According to another preferred embodiment a weight amount of the fluorine free organic polymer or mixtures thereof is at least 10 wt.-%, more preferably at least 20 wt.-%, even more preferably at least 30 wt.-%, based on the weight of the contact sliding seal. For example, the amount of the fluorine free organic polymer or mixtures thereof is 40 wt.-%, based on the weight of the contact sliding seal. In other words, preferably the material used for the contact sliding seal of the dynamic sealing system preferably comprises a fluorine free organic polymer or mixtures thereof in a weight amount of at least 10 wt.-%, more preferably at least 20 wt.-%, even more preferably at least 30 wt.-%, based on the weight of the material. It is also possible that the contact sliding seal consists of the fluorine free organic polymer or mixtures thereof.

According to another preferred embodiment of the invention, a dynamic sealing system is provided wherein the contact sliding seal comprises a polymer selected from polyether ether ketone (PEEK), polyetherimides (PEI), ultra-high molecular weight polyethylene (UHMW-PE), polyamide (PA), polybenzimidazole (PBI), polyimide (PI), and mixtures thereof. In other words, preferably PEEK, PEI, UHMW-PE, PA, PBI, PI or mixtures thereof are used as material for the contact sliding seal of the dynamic sealing system. Most preferred are PEEK, PEI, and/or UHMW-PE.

In this regard and according to another preferred embodiment a dynamic sealing system is provided wherein the contact sliding seal comprises polyether ether ketone (PEEK), polyetherimide (PEI), and/or ultra-high molecular weight polyethylene, (UHMW-PE). These materials are particularly advantageous for the dynamic sealing system of the high or medium voltage apparatus.

The molecular backbone of PEEK contains alternately ketone (R-C=O-R) and ether groups (R-O-R). The linking group R between the functional groups consists of a 1,4-substituted aryl group. In particular, the repeating unit of PEEK is built up from the subunits p-dimethoxybenzene and 4,4 -dihydroxybenzophenone.

PEI belong to the group of polyimides and are polymers with imide groups and ether groups in the molecular backbone.

UHMW-PE also known as high-modulus polyethylene, (HMPE), is a subset of thermoplastic polyethylene. UHMW-PE has extremely long chains, with a molecular mass usually between 3,5 and 7,5 million u. The unit u is the unified atomic mass unit and is also called Dalton.

According to another preferred embodiment of the invention the contact sliding seal comprises a polymer compatible with the insulation fluid of the high or medium voltage apparatus. The material of the contact sliding seal and in particular the polymer of the contact sliding seal, is preferably compatible with the insulation fluid and more preferably with the insulation gas to such an extent that the polymer does not degrade upon contact to the insulation fluid. Further preferably the function of the insulation fluid is also not affected by the contact of the insulation fluid to the contact sliding seal.

According to another embodiment of the invention, the contact sliding seal comprises a filler. Different types of fillers can be used. Fillers can be particles, powders or fibers added to the polymer of the contact sliding seal. The fillers can alter the properties of the contact sliding seal, e.g. change the elasticity of the contact sliding seal or alter the heat capacity of the contact sliding seal.

In this regard and according to another preferred embodiment of the invention the filler is selected from metal type fillers, such as copper, bronze, zinc silver nickel, and/or steel; and/or carbon type fillers such as carbon black, carbon nanotubes, graphite, graphene, and/or carbon fibers; and/or non-conductive fillers, such as glass fibers, molybdenum disulfide (MoS₂), silica, silicon oxide, aluminum nitride, and/or boron nitride.

The fillers can be used in the contact sliding seal with different amounts. According to another embodiment of the invention the contact sliding seal comprises less than 80 wt.-% filler, preferably less than 70 wt.-% filler, more preferably less than 65 wt.-% filler, based on the weight of the contact sliding seal. In other words, preferably the material used for the contact siding seal comprises the filler in a weight amount of less than 80 wt.-%, preferably less than 70 wt.-%, and more preferably less than 75 wt.-%, based on the weight of the material.

Preferably the material of the contact sliding seal is such that it does not create excessive conductive wear debris when used in the high or medium voltage apparatus. Particular preferably the contact sliding seal does not create excessive conductive wear debris when used in the high or medium voltage apparatus to such an extent that the high or medium voltage apparatus can no longer perform the circuit breaking operation. In this context and according to another preferred embodiment, the contact sliding seal is free of a conductive filler. In the context of this invention a conductive filler is a filler having an electrical conductivity of > 10⁻² S/m at 20 °C. A conductive filler may lead to floating potential variation once wear debris intrude into the arcing chamber of the circuit breaker. Thus, preferably the material used for the contact sliding seal of the dynamic sealing system is free of a conductive filler.

It is possible that the contact sliding seal is free of a filler. Alternatively, the contact sliding seal comprises the filler and more preferably the non-conductive filler. According to a preferred embodiment of the invention, a dynamic sealing system is provided, wherein the contact sliding seal comprises the non-conductive filler. In other words, the material used for the contact sliding seal may comprise a non-conductive filler. In the context of this invention a non-conductive filler, is a filler having an electrical conductivity of ≤ 10⁻² S/m at 20 °C.

Particular preferably the non-conductive filler is selected from particles and/or fibers comprising glass, molybdenum disulfide (MoS₂), silica, silicon oxide, aluminum nitride, boron nitride and/or mixtures thereof.

According to another preferred embodiment of the invention the contact sliding seal comprises a filler compatible with the insulation fluid of the high or medium voltage apparatus. The material of the contact sliding seal and in particular the filler of the contact sliding seal, is preferably compatible with the insulation fluid and more preferably with the insulation gas to such an extent that the filler does not degrade upon contact to the insulation fluid of the high or medium voltage apparatus.

Furthermore, preferably the material of the contact sliding seal comprising the polymer and the filler is compatible with the insulation fluid of the high or medium voltage apparatus. The material of the contact sliding seal comprising the polymer and the filler does preferably not degrade upon contact to the insulation fluid of the high or medium voltage apparatus.

Moisture content in the insulation fluid and particularly in the insulation gas of the high or medium voltage apparatus is of high concern, since water in the insulation fluid can alter the properties of the insulation fluid and/or lead to a deterioration of the functionality of the high or medium voltage apparatus. For example, for SF₆ as insulation gas, an absorption of water leads to the situation that an arc product of SF₆, in particular SF₄, becomes actively acidic as it reacts with the water to HF. HF within the arcing chamber would lead to a fast deterioration of metal parts of the high or medium voltage apparatus. Hence a migration of external moisture into the arcing chamber of the high or medium voltage apparatus needs to be prevented. In this context and according to another preferred embodiment of the invention, the contact sliding seal has a saturation water absorption ratio at room temperature of less than 1,5 %, and preferably of less than 0,5 %, determined in accordance to ISO 62-1. Preferably the water absorption ratio at room temperature is determined in accordance with method 1 in ISO 62-1. The low permeability of the contact sliding seal for water helps to avoid penetration of water into the arcing chamber, where the water could accelerate the breakdown of the insulation fluid or individual components thereof. In other words, using a material with a saturation water absorption ratio at room temperature of less than 1,5 %, preferably of less than 0,5 %, determined in accordance to ISO 62-1 as contact sliding seal improves the lifetime and reliability of the high or medium voltage apparatus.

As the sealing system is preferably used in the high or medium voltage apparatus and more preferably in the circuit breaker, it is of high importance that the contact sliding seal and/or the material of the contact sliding seal is compatible with lubricants used in the high or medium voltage apparatus. Preferred lubricants that can be used in the high or medium voltage apparatus with the dynamic sealing system are lubricants that comprise silicones, synthetic hydrocarbons, such as polyalphaolefine, perfluorinated polyether, polyalkylene glycol, fluorosilicone, esters and/or mixtures thereof, wherein polyalphaolefine, perfluorinated polyether, polyalkylene glycol, and/or fluorosilicone are preferred. According to another preferred embodiment of the invention, the contact sliding seal has a weight change ratio of less than 1 % when contacted with a lubricant comprising silicones, synthetic hydrocarbons, such as polyalphaolefine, perfluorinated polyether, polyalkylene glycol, fluorosilicone, esters and/or mixtures thereof. Further preferably the weight change ratio is determined by coating a sample of the contact sliding seal with a layer of lubricant, and heating the coated sample to 75 °C in an oven for one week. The mass change was recorded to identify the compatibility of the lubricant with the material of the contact sliding seal. In other words, the material used for the contact sliding seal in the high or medium voltage apparatus is compatible with the lubricants used in the high or medium voltage apparatus. None of the lubricants comprising silicones, synthetic hydrocarbons, such as polyalphaolefine, perfluorinated polyether, polyalkylene glycol, fluorosilicone, esters and/or mixtures thereof, leads to a deterioration of the contact sliding seal and/or to a deterioration of the material of the contact sliding seal. Thus, the contact sliding seal can reliably seal the fluid-insulated sealed chamber of the high or medium voltage apparatus and particularly the gas-insulated arcing chamber of the circuit breaker.

With regard to the performance of the contact sliding seal and according to a preferred embodiment of the invention, the contact sliding seal preferably has a coefficient of friction of less than 0,3, and preferably of less than 0,2, more preferably less than 0,1 determined under lubricant conditions and with a PV-value of 15 MPa × m/s. Further preferably the coefficient of friction is determined in accordance to ASTM G99-17. Preferably, the lubricant comprises as oil a perfluoropolyether (PFPE) and further preferably additionally Polytetrafluoroethylene (PTFE). These coefficients of frictions have been shown to ensure a reliable operation of the high or medium voltage apparatus and in particular of the circuit breaker. The PV-value is the product of velocity (V) and pressure (P). The PV-value indicates the heat generated in the bearing per unit of time. Thus, the fluorine free contact sliding seal has a comparative or even improved coefficient of friction compared to fluorinated contact sliding seals, such as PTFE comprising contact sliding seals.

Furthermore, and according to another preferred embodiment of the invention, the contact sliding seal has a wear loss of ≤ 7 µm/km, preferably ≤ 6 µm/km, and even more preferably ≤ 5 µm/km, determined under lubricant conditions and with a PV-value of 15 MPa × m/s, in accordance to ASTM G99-17. The wear loss of the material used for the contact sliding seal indicates the damaging, gradual removal or deformation of the material. As the fluorine free material used for the contact sliding seal has a lower wear loss than typical fluorinated contact sliding seals with wear losses of 7,5 µm/km, the fluorine free contact sliding seal has an improved reliability and life-time.

According to another preferred embodiment, a dynamic sealing system is provided wherein the contact sliding seal has a temperature rise of the contact surface of ≤ 60 °C, and preferably ≤ 55 °C determined under lubricant conditions and with a PV-value of 15 MPa × m/s. The temperature rise of the mating surface reflects the heat generated during the high-speed motion. The low temperature rise of the fluorine free contact sliding seal improves the performance and life-time of the contact sliding seal.

With regard to the risk of long-term application, the plastic deformation under stress or pressure, also named creep, can cause the contact sliding seal to gradually flow into an extrusion gap between the moving rod and stationary element of the high or medium voltage apparatus. Over time creep can eventually lead to a gas leakage. In this context and according to a preferred embodiment of the invention a dynamic sealing system is provided, wherein the contact sliding seal has an irreversible plastic deformation of less than 1,5 %, preferably less than 1 %, even more preferable less than 0,5 %, determined by a creep test under 70 °C. Further preferably the creep was determined with a stress of 3 MPa for 120 minutes, and after a recovery of 120 min under 70 °C. As the fluorine free material used for the contact sliding seal has a lower irreversible plastic deformation than typical fluorinated contact sliding seals with an irreversible plastic deformation strain of 1,9 %, the risk of long-term application is reduced with the fluorine free contact sliding seal.

The creep behaviour of the contact sliding seal may be adapted by altering the molecular weight of the fluorine free organic polymer. An increasing molecular weight tends to make the polymer more creep resistant. Accordingly, preferably the molecular weight of the polymer of the contact sliding seal is preferably such that the above mentioned irreversible plastic deformation values are achieved. Furthermore, polymers having aromatic rings, such as PEEK or PEI show lower irreversible plastic deformation.

According to another preferred embodiment of the invention, the contact sliding seal is configured as annular element. Preferably the contact sliding seal has the form of an annular element, for example the form of a ring, or grooved ring. In a radial cross section, the contact sliding seal may have a circular shape, an oval shape, a rectangular shape, a rectangular shape with rounded edges, a trapezoidal shape, a trapezoidal shape with rounded edges, a U-shape with two legs, or any other shape appropriate for the sealing needs. Preferably the contact sliding seal is configured as a slide ring.

According to another preferred embodiment of the invention, the sealing system comprises an annular pretension element. Preferably the annular pretension element contacts the contact sliding seal and pretensions it. Particular preferably the annular pretension element is configured as an O-ring energizer.

As already mentioned, the invention is also directed to the high or medium voltage apparatus, preferably a gas-insulated high or medium voltage circuit breaker, comprising the fluid-insulated arcing chamber, the operating mechanism, and the above-described sealing system. Particular preferably the contact sliding seal is arranged such that the contact sliding seal is in direct contact to the rod.

According to a preferred embodiment, a high or medium voltage apparatus is provided, wherein the high or medium voltage apparatus comprises as stationary element a guiding member for glidingly guiding the motion of the rod, wherein the guiding member comprises a sealing groove, and wherein the contact sliding seal is arranged in the sealing groove such that the contact sliding seal is in direct contact to the rod. The guiding member may have a shape corresponding to the shape of the rod. For example, the rod may have a cylindrical shape. In order to allow guiding of the motion of the rod, the guiding member may have in this example a circular opening corresponding to the circumference of the rod. In other words, the rod is preferably arranged such that the rod passes through the opening of the guiding member. The guiding member may be integrally formed with the arcing chamber, or with a wall of the arcing chamber, or the guiding member may be connected to the arcing chamber.

With regard to the sealing groove, preferably a wall of the opening of the guiding member comprises the sealing groove. Even more preferably the wall of the opening of the guiding member comprises a circumferential sealing groove. The contact sliding seal of the sealing system is preferably arranged within the sealing groove such that the contact sliding seal is in direct contact to the rod. In this embodiment the contact sliding seal of the sealing system preferably sealingly rests on the outer surface of the rod.

In an alternative embodiment the high or medium voltage apparatus comprises as stationary element the guiding member for glidingly guiding the motion of the rod, wherein the rod comprises the sealing groove, and wherein the contact sliding seal is arranged in the sealing groove such that the contact sliding seal is in direct contact to the contact surface of the stationary element. Even more preferably the outer surface of the rod comprises a circumferential sealing groove. The contact sliding seal of the sealing system is preferably arranged within the sealing groove such that the contact sliding seal is in direct contact to the outer surface of the contact surface of the stationary element. In this embodiment the contact sliding seal of the sealing system preferably sealingly rests on the inner contact surface of the stationary element.

According to another preferred embodiment the sealing system comprises in addition to the contact sliding seal the annular pretension element. The annular pretension element is preferably arranged within the sealing groove, such that it is in direct contact to the contact sliding seal.

Further preferably with regard to the embodiment wherein the wall of the opening of the guiding member comprises the sealing groove, the pretension element is preferably arranged circumferentially around the contact sliding seal and pretensions the contact sliding seal radially inwards. Thus, the pretension element provides a pressure towards the contact sliding seal and ensures a contact pressure of the contact sliding seal towards the rod.

Further preferably with regard to the embodiment wherein the rod comprises the sealing groove, the pretension element is preferably arranged circumferentially along an inner circumference of the contact sliding seal and pretensions the contact sliding seal radially outwards. Thus, the pretension element provides a pressure towards the contact sliding seal and ensures a contact pressure of the contact sliding seal towards the contact surface of the stationary element.

According to another preferred embodiment of the invention a high or medium voltage apparatus is provided comprising an insulation fluid, and wherein the insulation fluid is a gas, preferably an ecofriendly insulating gas, such as CO₂, or mixtures with CO₂, mixtures of SF₆ with a carrier gas and/or mixtures of fluoroketons and/or fluoronitriles with a carrier gas. The carrier gas for use with fluoroketons and/or fluoronitriles and/or SF₆ may comprise air, N₂, CO₂, and mixtures thereof. Further preferably the insulation gas may have a reduced fluorine content or may even be essentially fluorine free. As the sealing system and insulation gas are compatible to each other, such a high or medium voltage apparatus has a high reliability and lifetime.

Further embodiments and advantages of the high or medium voltage apparatus are directly and unambiguously derived by the person skilled in the art from the description of the dynamic sealing system for the high or medium voltage apparatus as described before.

### Brief description of drawings

These and other aspects of the invention will be apparent from and elucidated with reference to the embodiments described hereinafter.

In the drawings:
- Fig. 1: schematically shows a cross-sectional view of a part of a gas-insulated high voltage circuit breaker with a dynamic sealing system, according to an embodiment;
- Fig. 2: schematically shows results of a compatibility test performed with a fluorine free contact sliding seal according to an embodiment and of a comparative fluorine containing contact sliding seal;
- Fig. 3: schematically shows results of the creep and recovery behaviour of the fluorine free contact sliding seals according to an embodiment and of a comparative fluorine containing contact sliding seal.

### Description of embodiments

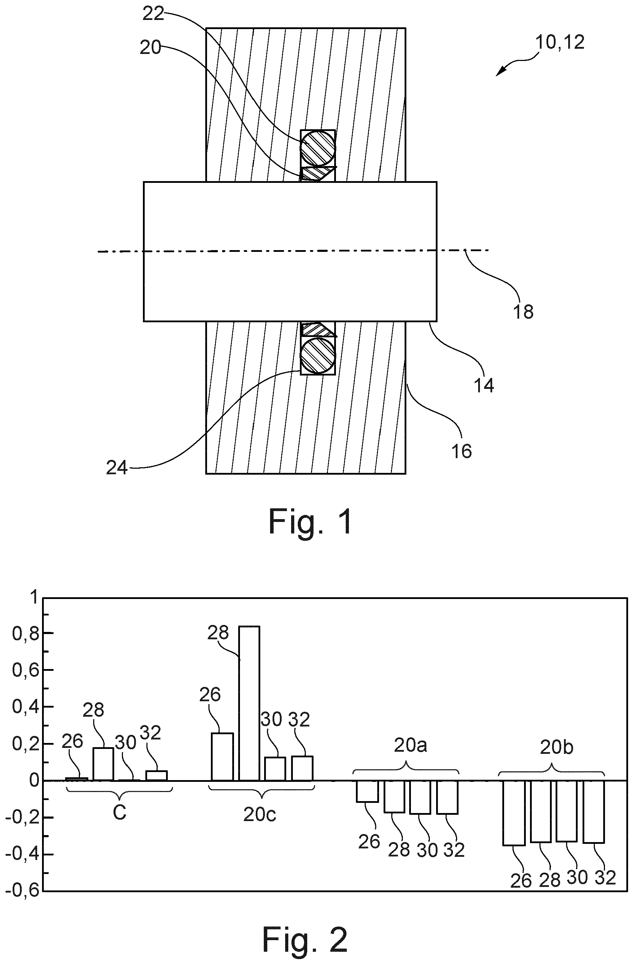

Fig. 1 schematically shows a cross-sectional view of a part of a gas-insulated high voltage circuit breaker 10 with a dynamic sealing system 12 according to an embodiment. The dynamic sealing system 12 seals a moving rod 14 of the circuit breaker 10 towards a stationary element 16 of the circuit breaker 10 against a loss of an insulation gas of the circuit breaker 10. In this embodiment, the rod 14 performs a linear motion along a longitudinal axis 18 of the rod 14, during circuit breaking and connecting operation. The sealing system 12 in this embodiment comprises a contact sliding seal 20 and a pretension element 22. The contact sliding seal 20 is configured as a slide ring 20 and the pretension element 22 is configured as O-ring energizer 22. The contact sliding seal 20 and the pretension element 22 are arranged in a sealing groove 24 of the stationary element 16 of the circuit breaker 10. In this embodiment the rod 14 has a cylindrical shape and is glidingly guided by the stationary element 16, which acts as guiding member 16. The contact sliding seal 20 comes in direct contact to the rod 14. The contact sliding seal 20 is fluorine free.

Three fluorine free contact sliding seals 20a, 20b, 20c have been compared to a conventional fluorine containing sliding seal C. The material of the conventional fluorine containing sliding seal C is reinforced polytetrafluoroethylene PTFE. The material of the first fluorine free contact sliding seals 20a is PEEK, the material of the second fluorine free contact sliding seals 20b is PEI and the material of the third fluorine free contact sliding seals 20c is UHMW-PE. Tribological performance, deformation resistance, and stability towards lubricants of the fluorine free contact sliding seals 20a, 20b, 20c and of the comparative fluorine containing contact sliding seal C have been tested under conditions comparable to the working conditions within the gas-insulated high voltage circuit breaker 10.

Fig. 2 schematically shows the results of a compatibility test performed with the fluorine free contact sliding seals 20a, 20b, 20c and with the comparative fluorine containing contact sliding seal C towards the lubricants polyalphaolefine 26, perfluorinated polyether 28, polyalkylene glycol 30, and fluorosilicone 32.

As can be seen in figure 2 - which indicates on the y-axis the weight change ration in % - the weight change ratio of the contact sliding seals 20a, 20b, 20c is less than 1% and comparable to the weight change ratio of the comparative fluorine containing contact sliding seal C.

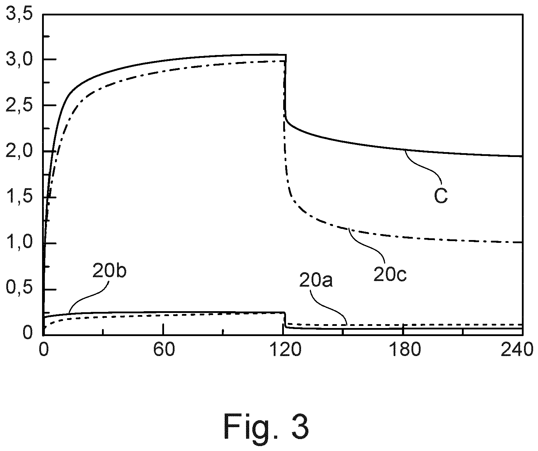

Fig. 3 schematically shows a creep and recovery behaviour of the fluorine free contact sliding seals 20a, 20b, 20c and of the comparative fluorine containing contact sliding seal C. The y-axis of figure 3 indicates the strain in %, and the x-axis of figure 3 indicates the time in minutes. The creep test was performed at 70 °C with a stress of 3 MPa, which is close to the working conditions in the circuit breaker 10. The creep strain of the comparative fluorine containing contact sliding seal C is 3,1%. As can be seen in figure 3, the fluorine free contact sliding seals 20a, 20b, 20c show lower creep strains, especially the contact sliding seal 20a, made of PEEK (0,2%) and contact sliding seal 20b, made of PEI (0,2%).

After a recovery with 120 min under 70 °C, the strain returned to 1,9% for comparative fluorine containing contact sliding seal C. The fluorine free contact sliding seals 20a, 20b, 20c show much lower strains, especially the contact sliding seal 20a, made of PEEK (0,1%) and the contact sliding seal 20b, made of PEI (0,1%). Thus, the fluorine free contact sliding seals 20a, 20b, 20c exhibit better plastic deformation resistance, than the comparative fluorine containing contact sliding seal C.

Furthermore, the tribological performances of the fluorine free contact sliding seals 20a, 20b, 20c and the comparative fluorine containing contact sliding seal C have been determined and are summarized in table 1. In an experimental arrangement, the coefficient of friction (COF), the wear loss and the temperature rise of a contact surface were determined under lubricant condition and a PV value with 15MPa·m/s.

**Table 1: tribological performances of contact sliding seals**

| | PV condition: 15 MPa × m/s | | | |
|---|---|---|---|---|
| | C (PTFE) | 20a (PEEK) | 20b (PEI) | 20c (UHMW-PE) |
| COF | 0,11-0,25 | 0,11-0,26 | 0,11-0,17 | 0,08-0,21 |
| Wear loss (µm/km) | 7,5 | 1,3 | 6,0 | 5,0 |
| Temperature rise (°C) | 63 | 51 | 45 | 54 |

Compared to the comparative fluorine containing contact sliding seal C made of PTFE, fluorine free contact sliding seals 20a, 20b, 20c exhibit comparative coefficient of friction (COF). The contact sliding seal 20b even shows a lower COF in the range of range of less than 0,2.

With regard to wear resistance, the wear loss of the fluorine free contact sliding seals 20a, 20b, 20c are lower than the wear loss of the comparative fluorine containing contact sliding seal C made of PTFE. The contact sliding seal 20a shows the best wear loss with only 1,3 µm/km

The temperature rise for the mating surface reflects the heat generated during the high-speed motion. As is evident from the results in table 1, the fluorine free contact sliding seals 20a, 20b, 20c show significant lower temperature increasement compared to the comparative fluorine containing contact sliding seal C made of PTFE.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 10: circuit breaker
- 12: dynamic sealing system
- 14: moving element, rod
- 16: stationary element, guiding member
- 18: longitudinal axis of rod
- 20: contact sliding seal, slide ring
- 20a: contact sliding seals made of PEEK
- 20b: contact sliding seals made of PEI
- 20c: contact sliding seals made of UHMW-PE
- 22: pretension element, O-ring energizer
- 24: sealing groove
- 26: polyalphaolefine
- 28: perfluorinated polyether
- 30: polyalkylene glycol
- 32: fluorosilicone

- C: fluorine containing contact sliding seal

## Claims

1. A dynamic sealing system (12) for sealing a moving element (14) of a fluid-insulated high or medium voltage apparatus (10) towards a stationary element (16) of the apparatus (10) against a loss of an insulation fluid of the apparatus (10), comprising a contact sliding seal (20), wherein the contact sliding seal (20) is configured to come in direct contact to the moving element (14) of the apparatus (10) performing a motion during operation of the apparatus (10), and/or wherein the contact sliding seal (20) is configured to come in direct contact to a contact surface of the stationary element (16) during operation of the apparatus (10), and wherein the contact sliding seal (20) is essentially fluorine free.

2. The dynamic sealing system (12) according to claim 1,
wherein the contact sliding seal (20) comprises a polymer selected from polyether ether ketone(20a), polyetherimide(20b), ultra-high molecular weight polyethylene (20c), polyamide, polybenzimidazole, polyimide, and mixtures thereof; wherein polyether ether ketone (20a), polyetherimide (20b), and/or ultra-high molecular weight polyethylene (20c) are preferred.

3. The dynamic sealing system (12) according to any of the preceding claims, wherein the contact sliding seal (20) comprises a filler.

4. The dynamic sealing system (12) according to the preceding claim,
wherein the filler is selected from metal type fillers, such as copper, bronze, zinc silver nickel, and/or steel; carbon type fillers such as carbon black, carbon nanotubes, graphite, graphene, and/or carbon fibers; non-conductive fillers, such as glass fibers, molybdenum disulfide, silica, silicon oxide, aluminum nitride, and/or boron nitride.

5. The dynamic sealing system (12) according to any of the preceding claims, wherein the contact sliding seal (20) comprises ≤ 80 wt.-% filler, preferably ≤ 70 wt.-% filler, more preferably ≤ 60 wt.-% filler with respect to the weight of the contact sliding seal, and/or wherein the contact sliding seal comprises > 0 wt% filler, preferably ≥ 5 wt.-% filler, even more preferably ≥ 10 wt.-% filler with respect to the weight of the contact sliding seal.

6. The dynamic sealing system (12) according to any of the preceding claims, wherein the contact sliding seal (20) has a saturation water absorption ratio at room temperature of less than 1,5 %, and preferably less than 0,5 %, determined in accordance to ISO 62-1.

7. The dynamic sealing system (12) according to any of the preceding claims, wherein the contact sliding seal (20) has a weight change ratio of less than 1 % when contacted with a lubricant, wherein the lubricant comprises silicones, synthetic hydrocarbons, such as polyalphaolefine (26), perfluorinated polyether (28), polyalkylene glycol (30), fluorosilicone (32), esters and/or mixtures thereof.

8. The dynamic sealing system (12) according to any of the preceding claims, wherein the contact sliding seal (20) has a coefficient of friction of less than 0,3, preferably less than 0,2, more preferably less than 0,1, determined under lubricant conditions and with a PV-value of 15 MPa × m/s.

9. The dynamic sealing system (12) according to any of the preceding claims, wherein the contact sliding seal (20) has an irreversible plastic deformation of less than 1,5 %, preferably less than 1%, even more preferable less than 0,5 %, determined by a creep test under 70 °C.

10. The dynamic sealing system (12) according to any of the preceding claims, wherein the contact sliding seal (20) is configured as annular element.

11. The dynamic sealing system (12) according any of the preceding claims, wherein the sealing system (12) comprises an annular pretension element (22), and wherein the annular pretension element (22) contacts the contact sliding seal (20) and pretensions it.

12. A high or medium voltage apparatus (10) comprising a fluid-insulated arcing chamber, an operating mechanism, and a sealing system (12) according to any of the previous claims, wherein the operating mechanism comprises a first arcing contact and a second arcing contact and is configured to electrically connect and/or disconnect the first arcing contact and the second arcing contact within the arcing chamber by a motion of a rod (14) as moving element (14), and wherein the contact sliding seal (20) is arranged such that the contact sliding seal (20) is in direct contact to the rod (14) and/or to a contact surface of the stationary element (16).

13. The high or medium voltage apparatus (10) according to the previous claim, wherein the apparatus (10) comprises as stationary element (16) a guiding member (16) for glidingly guiding the motion of the rod (14), wherein the guiding member (16) comprises a sealing groove (24), and wherein the contact sliding seal (20) is arranged in the sealing groove (24) such that the contact sliding seal (20) is in direct contact to the rod (14).

14. The high or medium voltage apparatus (10) according to any of claims 12 or 13, comprising an insulation fluid, and wherein the insulation fluid is a gas, preferably an ecofriendly insulating gas, such as CO₂, mixtures of SF₆ with a carrier gas and/or mixtures of fluoroketons and/or fluoronitriles with a carrier gas.

15. Use of a material for a contact sliding seal (20) of a dynamic sealing system (12) for sealing a moving element (14) of a fluid-insulated high or medium voltage apparatus (10) towards a stationary element (16) of the apparatus (10) against a loss of an insulation fluid of the apparatus (10), wherein the material is essentially fluorine free.
